# EUROPEAN PATENT APPLICATION

(11) **EP 4 759 113 A1**
(43) Date of publication of application: **17.06.2026**
(21) Application number: 25223741.7
(22) Date of filing: 16.12.2025
(51) Int. Cl.: A01D 34/00

(54) **RADIO-CONTROLLED VEHICLE**

(30) Priority: 16.12.2024 IT 202400028617
(71) Applicant: MDB SRL, 66034 Lanciano (CH) (IT)
(72) Inventor: DI BIASE, Mario, 66034 LANCIANO (CH) (IT)
(74) Representative: Studio Torta S.p.A.

(57) **Abstract**

A radio-controlled vehicle (1; 101) with a frame (2), a kinetic unit (3), an engine (4), a control system (6) and a remote control (7); wherein the radio-controlled vehicle (1; 101) has a driven part (8) and a transmission system (9), which is interposed between the driven part (8) and the engine (4); the transmission system (9) is configured to transmit motion from the engine (4) to the driven part (8); wherein the driven part (8) and the frame (2) are reciprocally movable.

## Description

### CROSS-REFERENCE TO RELATED APPLICATIONS

This patent application claims priority from Italian patent application no. 102024000028617 filed on December 16, 2024, the entire disclosure of which is incorporated herein by reference.

### TECHNICAL FIELD

The present patent application for invention relates to an improved radio-controlled vehicle.

In particular, the present invention relates to a radio-controlled vehicle for carrying out agricultural, green areas maintenance or land decontamination work.

### PRIOR ART

It is known to carry out agricultural and green areas maintenance work (e.g., the cutting of grass, shrubs and bushes) by means of a radio-controlled vehicle configured to operate on grounds with slopes even up to 60°. Generally, this type of radio-controlled vehicle is configured to actuate a shredder or another type of tool.

Radio-controlled vehicles of the known type operate under highly precarious conditions in the presence of uneven grounds or grounds on which there are obstacles. For example, the ground can have holes/depressions/areas with collapsing or moving ground; furthermore, on the ground there can be as an example of obstacles: rocks, shrubs, and tree trunks.

Radio-controlled vehicles of the known type comprise, in particular, rotating bodies subjected to stress during use under high vibrations. Such vibrations can create misalignments with possible malfunctions of the vehicle.

### DESCRIPTION OF THE INVENTION

The object of the present invention is to provide a radio-controlled vehicle which can overcome the drawbacks indicated above.

According to the present invention, a radio-controlled vehicle is provided according to what claimed in the appended claims.

The dependent claims define particular embodiments of the invention.

### BRIEF DESCRIPTION OF THE DRAWINGS

In order to better understand the invention, embodiments thereof are described in the following by way of non-limiting example and with reference to the accompanying drawings, wherein:
- Figure 1 is a schematic perspective view of a radio-controlled vehicle according to the present invention;
- Figure 2 illustrates the radio-controlled vehicle of Figure 1, with some parts removed for the sake of clarity;
- Figure 3 is a plan view of a detail of Figure 2;
- Figure 4 is a section view according to line IV-IV of Figure 3;
- Figure 5 is an exploded view, with some parts removed for the sake of clarity, of the detail of Figure 3; and
- Figure 6 is a plan view of a further embodiment of a radio-controlled vehicle according to the present invention.

### EMBODIMENTS OF THE INVENTION

In the figures, reference numeral 1 indicates, as a whole, a radio-controlled vehicle 1 according to the present invention.

The radio-controlled vehicle 1 has:
- a longitudinal axis X, also known as roll axis, substantially parallel to the bearing plane XY of the radio-controlled vehicle 1;
- a vertical axis Z, also known as yaw axis, substantially perpendicular to the bearing plane XY; and
- a transverse axis Y, also known as pitch axis, substantially perpendicular both to the longitudinal axis X and the vertical axis Z.

Hereinbelow and in the figures, such reference system is used for all the components of the radio-controlled vehicle 1.

The terms such as front, rear, upper, lower, right, left (or the like) are used with reference to the normal operation of the radio-controlled vehicle 1 when moving forward in the advancement direction v on the bearing plane XY (the plane parallel to the plane XY).

The suffixes I and II are used to indicate the components on the left side and on the right side of the radio-controlled vehicle 1 according to the forward advancement direction v, respectively.

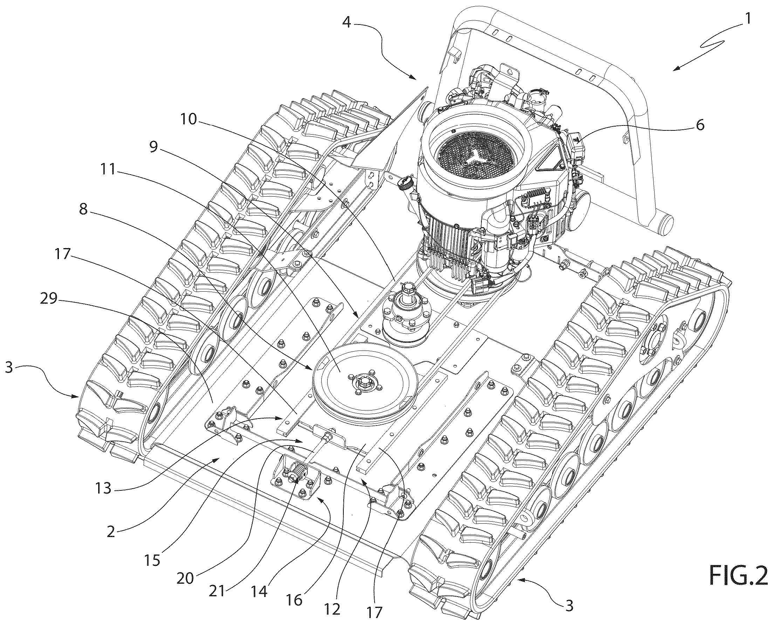

The radio-controlled vehicle 1 comprises: a frame 2 (Figure 2), a kinetic unit 3, an engine 4, a control system 6, and a remote control 7. The control 7 is configured (in a known manner) to exchange signals and/or data with the control system 6, so that an operator O can remotely control the actuations of the vehicle 1.

The radio-controlled vehicle 1 further comprises a driven part 8 and a transmission system 9, which is interposed between the engine 4 and the driven part 8 and is configured to transfer the motion from the engine 4 to the driven part 8. The engine 4 is a rotary one and can be selected from a group of engines which differ in type from one another. For example, the engine 4 can be an endothermic engine or an electric motor.

According to the illustrated example, the transmission system 9 is a belt system of the known type and schematically illustrated, which comprises one or more belts 10 fitted around a respective pulley 11 integral with the driven part 8.

Advantageously, the radio-controlled vehicle 1 further comprises a tensioning system 12 which is interposed between the driven part 8 and the frame 2.

In particular, the tensioning system 12 comprises:
- a support 13, on which the driven part 8 is fixed;
- an anchorage 14, which is fixed to the frame 2; and
- a tie rod 15, which is interposed between the support 13 and the anchoring body 14.

The support 13 is movable relative to the frame 2.

In particular, according to the example illustrated in the figures, the support 13 comprises a plate 16 which is slidably mounted relative to the frame 2 along the longitudinal axis X. More in detail, the radio-controlled vehicle 1 comprises a pair of guides 17 opposite each other and disposed parallel to the longitudinal axis X. The guides 17 create a form coupling with the plate 16. The plate 16 is slidably mounted along said guides 17. According to the illustrated example, each guide 17 has a C-groove 18. The grooves 18 of the guides 17 are opposite each other so as to form a sliding track for the plate 16. The plate 16 is slidable along the grooves 18 of the guides 17.

The anchorage 14 is directly fixed to the frame 2.

According to the illustrated example, the anchorage 14 comprises a sheet metal 19 bolted to the frame 2 and folded into an L-shape, so as to form a bracket. The shape and dimensions of the anchorage 14 are variable.

According to the illustrated example, the tie rod 15 comprises a screw 20 and an elastic return element 21. The screw 20 is fixed, at one end, to the plate 16 and, at the opposite end, to the anchorage 14. The elastic return element 21 exerts a pulling force Ft on the screw 20 at the anchorage 14. In particular, according to the illustrated example, the elastic return element 21 is a helical spring which is fitted around a respective end of the screw 20. Without losing generality, the elastic return element 21 can be selected from a group of elastic return elements 21 which differ in type from one another.

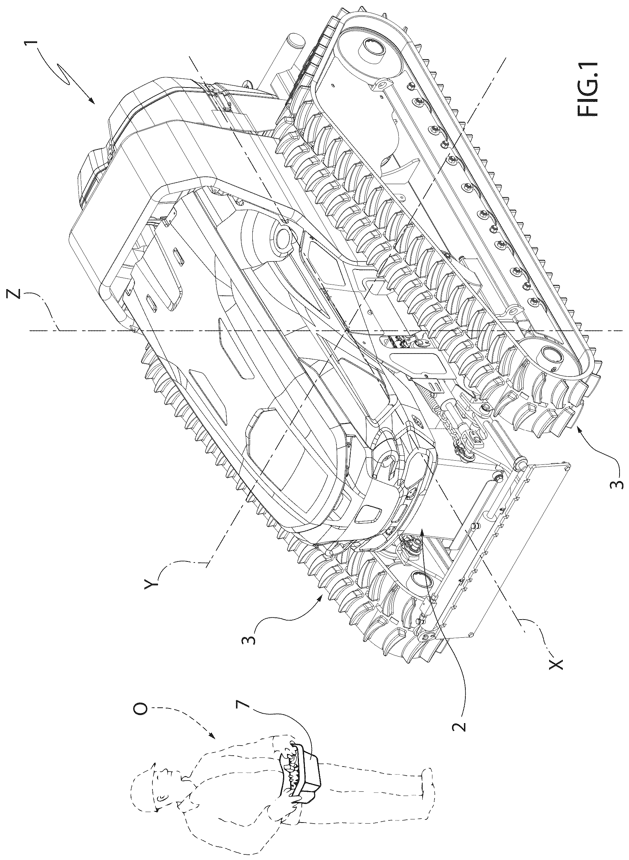

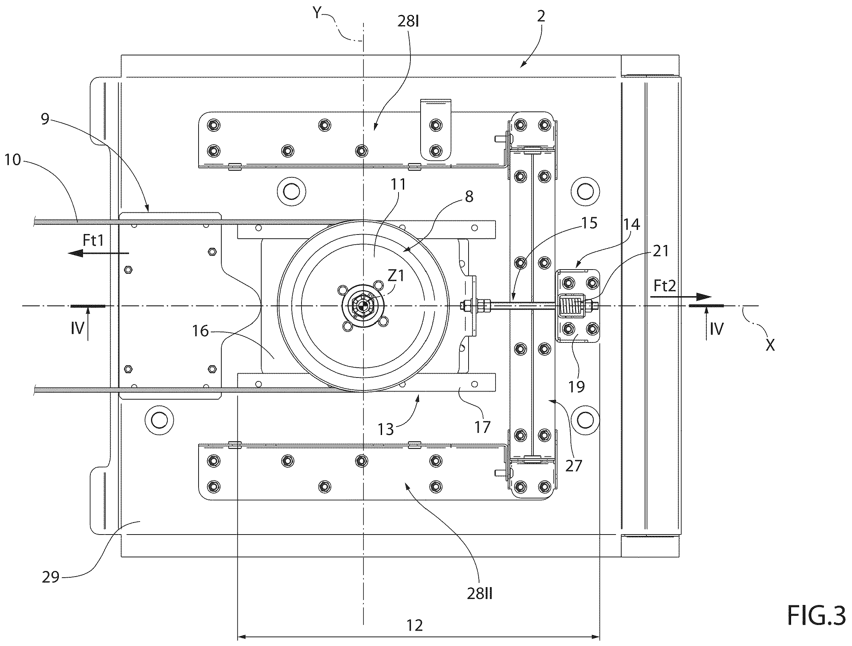

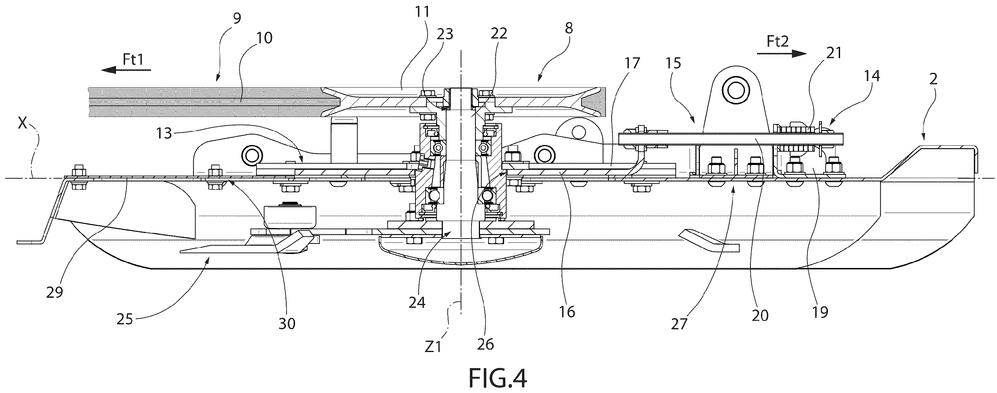

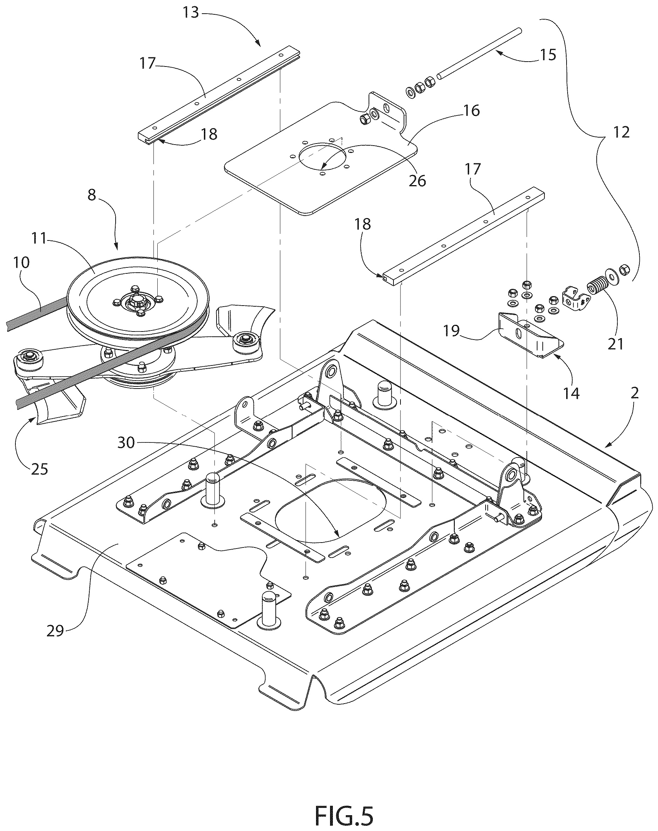

According to the example illustrated in Figures 1 to 5, the radio-controlled vehicle 1 is configured for cutting grass, and the driven part 8 comprises a rotating shaft 22 which is not directly fixed to the frame 2. In other words, the shaft 22 has two degrees of freedom relative to the frame 2.

According to the illustrated example, relative to the frame 2, the shaft 22 is rotatable about a rotation axis Z1 and is slidable along the longitudinal axis X, as it will be better illustrated in the following. The rotation axis Z1 is vertical, in other words it is perpendicular to the longitudinal axis X. The shaft 22 has an upper end 23, which is disposed above the frame 2; and a lower end 24, which is disposed below the frame 2.

The pulley 11 of the transmission system 12 is fitted onto the shaft 22 at the upper end 23. The driven part 8 comprises a cutting unit 25 which is fitted onto the shaft 22 at the lower end 24 (in a schematically illustrated known manner). The cutting unit 25 can be selected from a group of cutting units d which differ in type from one another. According to the illustrated example, the cutting unit 25 comprises two opposite blades.

The plate 16 has a hole 26, which is configured to be passed through by at least part of the shaft 22. The hole 26 and the shaft 22 are configured to form a rotary coupling with clearance; in particular, the shaft 22 is mounted rotatable inside the hole 26.

The shaft 22 is constrained to the sliding movements along its rotation axis Z1, relative to the plate 16, by means of constraints of the known type. For example, by means of shoulders.

The plate 16 has a hole, which is configured to be passed through by at least part of the shaft 22. The hole and the shaft 22 form a rotary coupling and the shaft 22 is mounted rotatable inside said hole.

The shaft 22 and the plate 16 are constrained to each other, for example by means of shoulders, relative to the sliding movements along the rotation axis Z1 thereof.

In use, the shaft 22 is rotated by the belt 10 in a schematically illustrated known manner.

According to the example illustrated in Figures 2-5, the frame 2 comprises: a cross-member 27, which is perpendicular to the longitudinal axis X; and two longitudinal members 28I, 28II parallel to the longitudinal axis X. The shape and dimensions of the frame 2 are variable.

The radio-controlled vehicle 1 further comprises a floor panel 29 which is fixed to the frame 2 and is configured to separate the interior of the radio-controlled vehicle 1 from the external environment at the bottom. The floor panel 29 has a slot 30, which is configured to be passed through by the shaft 22 of the driven part 8 and extends along the longitudinal axis X. The shaft 22 is mounted with clearance inside the slot 30 and is axially movable.

In use, the engine 4 rotates the shaft 22 in a known manner, by means of the transmission system 9. The belt 10 exerts a tensioning force Ft1 on the pulley 11. In use, the shaft 22 drags, by rotating, the cutting unit 25 to cut the grass. During the operation, the cutting unit 25 is subjected to vibrations and impacts. Advantageously, the tie rod 15 exerts on the shaft 22, along the same direction as the tensioning force Ft1, a pulling force Ft2. The tensioning force Ft1 has a direction which is opposite to the pulling force Ft2. Advantageously, the pulling force Ft2 is determined so as to maintain the shaft 22 within a range of determined positions along the slot 30 and maintain the belt 10 tensioned, and to ensure the correct operation of the transmission system 9 under any condition of use. In this manner, malfunctions of the transmission system 9 are advantageously avoided.

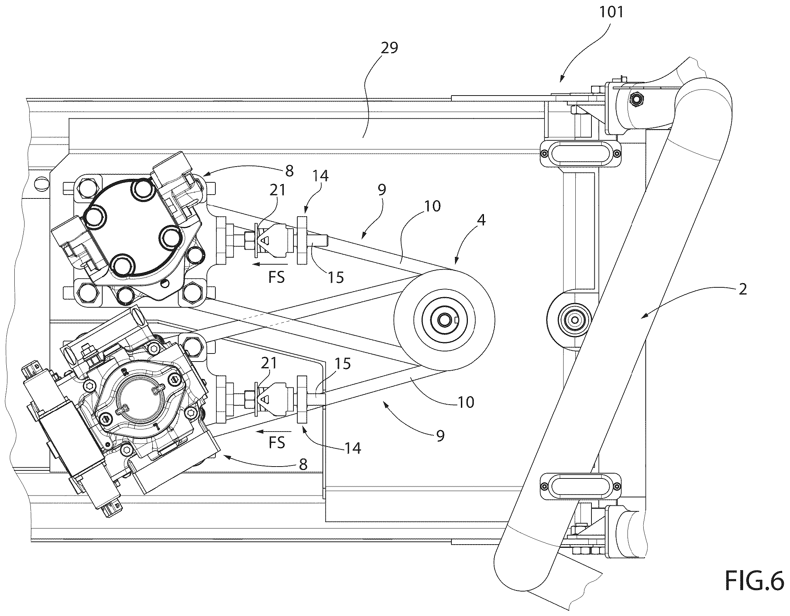

In Figure 6, reference numeral 101 illustrates, with parts removed for the sake of clarity, a further embodiment of a radio-controlled vehicle 1 according to the present invention.

In Figure 6, the components in common with what is described in the foregoing maintain the same reference numerals and are to be understood as comprised herein without repeating them for the sake of brevity.

In the example illustrated in Figure 6, the radio-controlled vehicle 1 comprises two driven parts 8. In particular, the driven parts 8 are hydraulic pumps. The radio-controlled vehicle 101 comprises, for each driven part 8, a respective support 13 and a respective tensioning system 12. In the example illustrated in Figure 6, each tensioning system 12 applies a thrust force Fs having the same direction and the same orientation as the respective belt 10. According to the example illustrated in Figure 6, each support 13 and the frame 2 are reciprocally movable, in particular translating. In the case illustrated in Figure 6, the supports 13 are solid plates on which the driven parts 8 are fixed.

Based on what set forth above it follows that the driven parts 8 are movable relative to the frame 2 and can be subjected to a determined force, such as to ensure the correct tensioning of the respective belt 10 and the operation of the radio-controlled vehicle 1, 101. This is particularly advantageous in the case where the radio-controlled vehicle 1, 101 works in uncomfortable environments, such as extreme slopes, increasing the reliability thereof. Indeed, the tensioning system 12 permits to counteract any bending of the components of the radio-controlled vehicle 1, 101 (e.g., of the bolted connections) due to the weight and the conditions of use of the driven parts 8 during use on slopes. The fact that the driven parts 8 are, at least partially, permitted to slip ensures that the bolted connections are not subjected to bending and the forces acting due to the slopes are counteracted by the tensioning system 12.

## Claims

1. A radio-controlled vehicle (1; 101) comprising a frame (2), a kinetic unit (3), an engine (4), a control system (6) and a remote control (7); wherein the radio-controlled vehicle (1; 101) comprises a driven part (8) and a transmission system (9), which is interposed between the driven part (8) and the engine (4); the transmission system (9) is configured to transmit motion from the engine (4) to the driven part (8); wherein the driven part (8) and the frame (2) are reciprocally movable.

2. A radio-controlled vehicle (1; 101) according to claim 1 and comprising a tensioning system (12), which connects the driven part (8) to the frame (2); wherein the tensioning system (12) is configured to apply a determined force (Ft2; Fs) on said driven part (8).

3. A radio-controlled vehicle (1; 101) according to claim 1 or 2, wherein the tensioning system (12) comprises a support (13), an anchorage (14) and a tie rod (15); wherein the driven part (8) is fixed to said support (13); the anchorage (14) is fixed to the frame (2); the tie rod (15) is interposed between the support (13) and the anchorage (14).

4. A radio-controlled vehicle (1; 101) according to claim 3, wherein the support (13) comprises a plate (16) parallel to the frame (2); wherein the anchorage (14) is a sheet metal fixed to the frame (2); wherein the tie rod (15) comprises a screw (20), which has a first end fixed to the plate (16) and a second end fixed to the anchorage (14); the tie rod (15) comprising an elastic return element (21), which applies said determined force (Ft2; Fs) at the second end of the screw (20).

5. A radio-controlled vehicle (1; 101) according to claim 4, wherein the plate (16) has a hole (26); wherein the frame (2) has a floor panel (29) with a slot (30), which extends along a first direction; wherein the support (13) and the floor panel (29) are overlapped; the hole (26) and the slot (30) are at least partially overlapped; wherein the hole (26) and the slot (30) are configured to be passed through by a respective portion of the driven part (8).

6. A radio-controlled vehicle (1; 101) according to claim 4 or 5 and comprising a system of at least a guide (17) fixed to the frame (2); wherein said guide (17) is configured to obtain a form coupling so as to permit a reciprocal translation between the plate (16) and the frame (2) along a determined direction.

7. A radio-controlled vehicle (1; 101) according to claim 5 or 6, wherein the driven part (8) comprises a shaft (22) which has a rotation axis (Z1) and is inserted through the hole (26) and the slot (30); the rotation axis (Z1) being perpendicular to a longitudinal axis (X) of the frame (2); the shaft (22) having a lower end disposed below the frame (2) and an upper end disposed above the frame (2); the driven part (8) comprising a cutting unit (25) fixed to the lower end of the shaft (22); the transmission system (9) comprising a pulley (11) fixed to the upper end of the shaft (22).

8. A radio-controlled vehicle (1; 101) according to any one of the preceding claims and comprising a plurality of driven parts (8), each being mobile relative to the frame (2).

9. A radio-controlled vehicle (1; 101) according to claim 8 and comprising a tensioning system (12) for each driven part (8).
